# EUROPEAN PATENT APPLICATION

(11) **EP 2 243 639 A1**
(43) Date of publication of application: **27.10.2010**
(21) Application number: 10161081.4
(22) Date of filing: 26.04.2010
(51) Int. Cl.: B60C 23/00

(54) **Pressure indicator**

(30) Priority: 24.04.2009 NL 2002802
(71) Applicant: Vehold B.V., 2719 RA Zoetermeer (NL)
(72) Inventor: Verweij, Jan Hendrik, 2719 RA, Zoetermeer (NL)
(74) Representative: Hatzmann, Martin

(57) **Abstract**

Current invention relates to a pressure indicator (1), suitable for connection on a valve of a tire and/or a tube and for valve stem (107) mounted indication of the pressure inside the tire (100) and/or the tube (103), the pressure indicator (1) comprising: a first pressure chamber (2) that is connected to the air volume (120) inside the vehicle tire or tube (108); a second pressure chamber (3); a check valve (27) that connects the first pressure chamber (2) to the second pressure chamber (3) and that only allows gas to pass from the first pressure chamber (2) into the second pressure chamber (3); and a membrane pressure switch (38) that is arranged between the first pressure chamber (2) and the second pressure chamber (3).

## Description

The invention relates to a pressure indicator. More specifically the invention relates to a pressure indicator suitable for vehicle tires.

Generally tires of vehicles tend to be slightly porous and thus tend to loose pressure over time, whereas these tires generally have a narrow range of optimal and/or designed operating pressure. A suboptimal pressure such as a pressure of a vehicle tire below the designed operating pressure of the tire can cause a number of problems, ranging from suboptimal roll resistance, suboptimal grip and excessive wear to a considerable enhancement of the accident probability of the vehicle in question.

For these and other reasons it is important that the driver of the vehicle checks the pressure of the tires on a regular basis. This pressure checking is however cumbersome and time consuming, which is one of the reasons why the pressure checking, although being important for safety reasons, is too often neglected. In order to solve this problem several indication systems for registering pressure in vehicle tires have been proposed.

One type of pressure indicating system relates to indicators that can be screwed onto the valve stem of the tube of a vehicle tire. An example of such indicators can be found in the United States patent US 6 629 454. This document discloses a screw on type of pressure indicator for vehicle tires, comprising a first and a second pressure chamber separated by a membrane, wherein a first surface of the membrane acts as a first contact terminal, and a first battery pole opposite to the first surface of the membrane acts as a second contact terminal. The first contact terminal is connected to an electrical printed circuit, which in turn is connected to an indicator connected to a second pole of the battery.

Once the pressure in the first chamber, which is connected to the inner gas volume of the vehicle tire, is low in comparison to the pressure in a second chamber, the membrane between the chambers flexes, causing the first and second contact terminals to make contact and thereby closing an electrical circuit. By closing the electrical circuit, the battery becomes connected to the indicator through the contacting terminals and the electrical printed circuit. Once this connection is established the logical printed circuit will generate an intermitted electrical signal which actuates the indicator. In US 6 629 454, the indicator comprises a set of light emitting diodes. Thus it becomes visible that the pressure is too low and that a dangerous situation is developing.

A disadvantage of this system is that the indicator is adding considerable length to the valve stem of the tube and/or tire, leading to impractical space requirements. The pressure indicator can for instance reach outside the rim of the wheel and can thus disturb the wheel balance.

A further disadvantage of this pressure indicator is that the cap needs to be screwed off or at least be un-tightened to calibrate the sensor and/or to equalise the pressure in both the first and the second pressure chamber.

US-4,763,517 discloses a valve cap pressure indicator that has a display that shows the internal pressure of the tire when the cap is depressed. It is not a continously monitoring device that warns the user when the pressure in the tire becomes too low or to high. The battery receiving space is not positioned next to the valve stem receiving space in the radial sense but axially behind the valve stem receiving space. Thus, the length of the know cap is rather large, which is disadvantageous.

WO2008/043177 is a device that may be mounted on the valve stem of a tire valve and that may be used to measure pressure inside the tire and to wirelessly transmit air pressure information to a receiver. It is, however, not a valve cap that can be used to close off a valve and to itself indicate whether the pressure in the tire is acceptable. Apart from that, when mounted on a tire valve stem, the total length thus obtained is considerable because the device is not a valve cap but an intermediate part on which a cap has to be mounted.

US-6,300,867 also adds considerable length to the standard valve stem of a valve of a tire with the associated disadvantages mentioned above. As with the device of W02008/043177 this known device is an intermediate part on which a cap has to be mounted.

An object of the invention can be to provide an alternative pressure indicator.

Another object of the invention can be to provide an alternative pressure indicating system that is less protruding from the valve stem of the tube and/or the tire.

Still another object of the invention can be to provide a pressure indicator that automatically calibrates.

At least one of these and/or other objects can be met by a pressure indicator, its method of manufacture and by a method of pressure indication as described below. Furthermore specific aspects of the invention can be found in the dependent claims.

A first aspect of the invention can be seen a pressure indicator, suitable for connection on a valve of a tire and/or a tube and for valve stem mounted indication of the pressure inside the tire and/or the tube, the pressure indicator comprising:
- a first pressure chamber that is connected to the air volume inside the vehicle tire or tube;
- a second pressure chamber;
- a check valve that connects the first pressure chamber to the second pressure chamber and that only allows gas to pass from the first pressure chamber into the second pressure chamber;
- a membrane pressure switch that is arranged between the first pressure chamber and the second pressure chamber.

A further aspect of the invention can be seen in a method of indicating and/or checking the pressure of a vehicle tire with the pressure indicator as described above comprising the following step: connecting the indicator on the valve stem of a vehicle tire.

For a better understanding, embodiments of pressure indicators and the method of indicating a pressure will be further elucidated by the following Figures, wherein:
Fig. 1a is a schematic perspective view of a wheel of a vehicle on which a first embodiment of the invention is installed;
Fig. 1b is a schematic side view of the wheel of a vehicle of figure 1a;
Fig. 2 is a schematic cross sectional side view of a second embodiment of the invention;
Fig. 3 is a schematic cross sectional side view of a third embodiment of the invention;
Fig. 4a is a schematic cut out cross section of the membrane section of figure 2 with a membrane in a first position;
Fig. 4b is a schematic cut out cross section of the membrane section of the embodiment of figure 2 with the membrane in a second position;
Fig. 5a is a schematic cut out cross section of the valve section of the embodiment of figure 2 with the valve in a first position;
Fig. 5b is a schematic cut out cross section of the membrane section of the embodiment of figure 2 with the valve in a second position;
Fig. 6 is a schematic cross section of the third embodiment of figure 3, installed upon a valve stem of a vehicle tire;
Fig. 7 is a schematic electrical scheme of an embodiment of the invention.

In the figures and the description the same or corresponding parts will have identical or similar reference signs. The embodiments shown should not be understood as limiting the invention in any way or form.

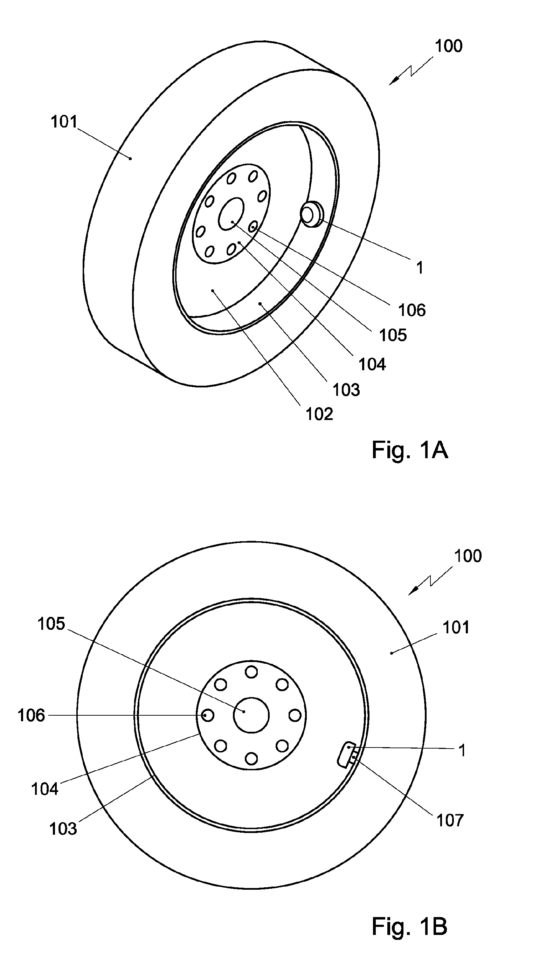

In figure 1a and 1b a vehicle wheel 100 is depicted. The vehicle wheel comprises a tire 101 around the rim 103 of a hub 102. The hub 102 can be connected to a shaft 105 by means of the connector surface 104 of the hub 102. In the connector surface 104, holes 106 are provided for attaching the connector surface 104 to a connector plate (not shown) attached to the shaft 105. Generally the hub 102 is connected to the shaft 105 by means of bolts. However any other type off connection for attaching the hub 102 to the shaft 105 can be applied.

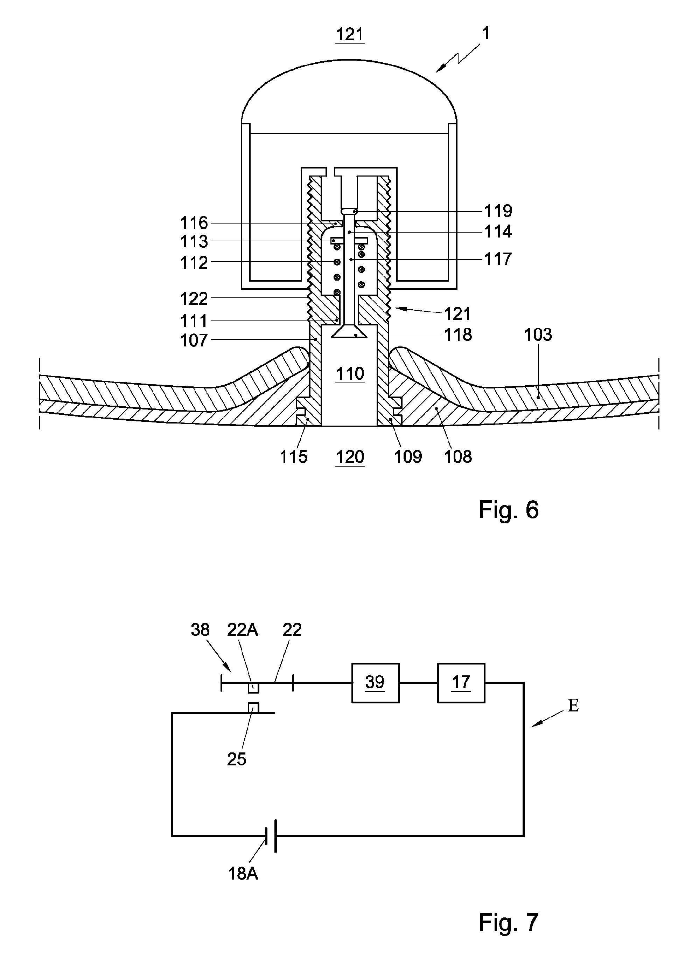

The tire 101 comprises a valve stem 107 having a longitudinal axis A for introducing air into the tire 101. Onto the valve stem 107, a pressure indicator 1 is attached. By the choice of the arrangements of a battery receiving space, the pressure indicator 1 is only minimally extending in the longitudinal axis from the valve stem 107. In detail the arrangement of the pressure indicator on the valve stem is illustrated in figure 6.

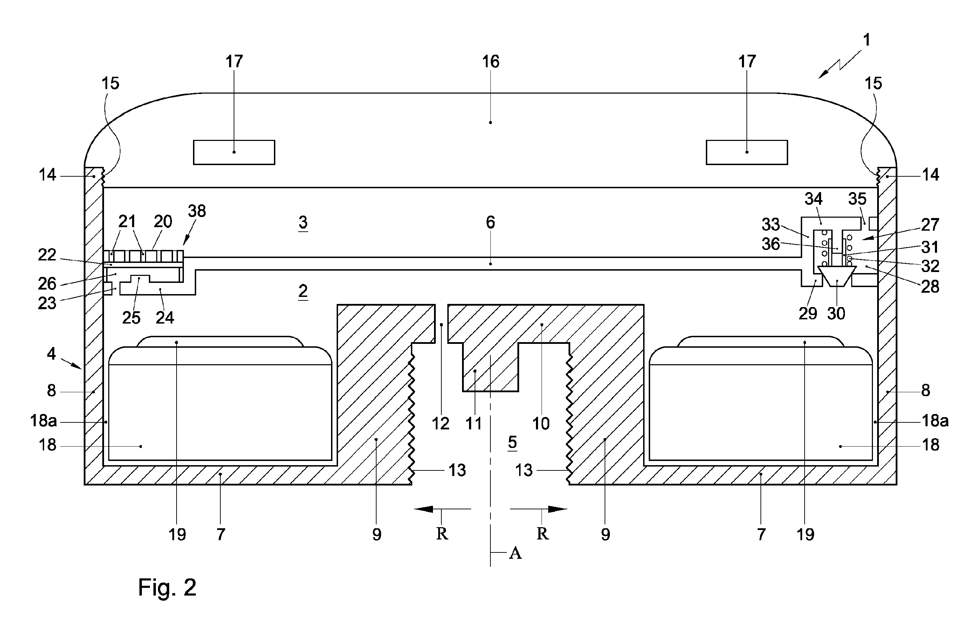

In figure 2 a cross sectional view of a first embodiment of the pressure indicator 1 is presented. In the pressure indicator 1 a first chamber 2 is provided which can be connected to an inner space 120 of a tube 108. How this connection to the valve stem 107 can be made is illustrated in figure 6 and explained below in more detail. In the first pressure chamber 2, at least one battery receiving space 18a is provided. In figure 2, two battery receiving spaces 18a are depicted. The battery receiving spaces 18a are, relative to the central longitudinal axis A, positioned offset relative to the central longitudinal axis A of a valve stem receiving space 5. The central longitudinal axis A of the valve stem receiving space coincides with the longitudinal axis of the valve stem 107 when the embodiment is mounted on the valves stem 107. In figure 2, the battery receiving spaces 18a are in a radial direction R placed next to the valve receiving space 5. By arranging the battery receiving spaces 18a next to the valve stem receiving space 5, the pressure indicator 1 protrudes less from the valve stem 107 in the longitudinal direction of the valve stem.

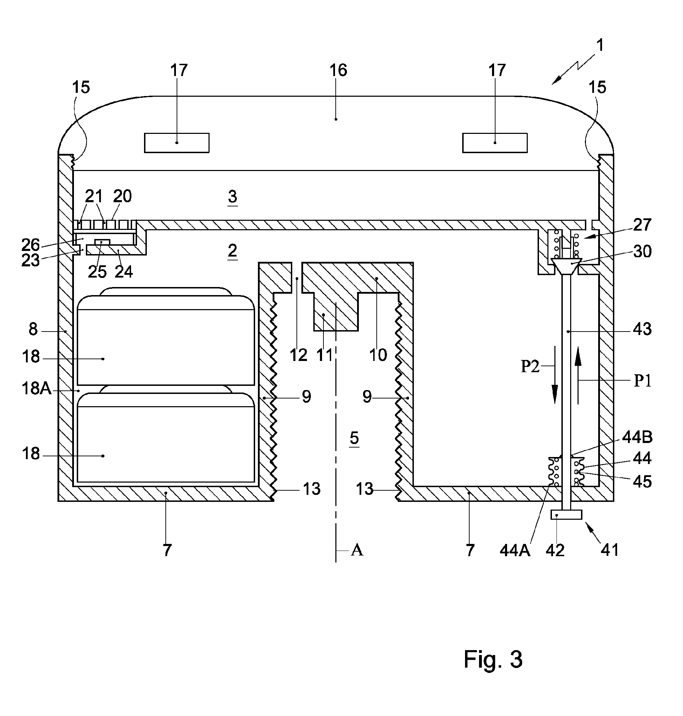

Figure 3 depicts another embodiment of the pressure indicator 1. In this figure only one battery receiving space 18a is arranged next to the valve stem receiving space 5. Alternatively, two or more battery receiving spaces 18a can be arranged next to and/or around the valve receiving space 18a in a suitable arrangement. A suitable arrangement in this aspect can be, for instance, that the battery receiving spaces 18a are distributed in substantially equal angles around the valve stem receiving space 5.

In the pressure indicator 1, a second pressure chamber 3 is provided. In the second pressure chamber 3 a reference pressure can be maintained. The first and the second pressure chambers 2, 3 are separated by a wall 6. The wall 6 is provided with a membrane compartment 38. The membrane compartment 38 comprises a chamber 26 with a first wall 24, on which a second contact terminal 25 is positioned. The second contact terminal 25 can be electrically connected to a first pole of at least one battery 18.

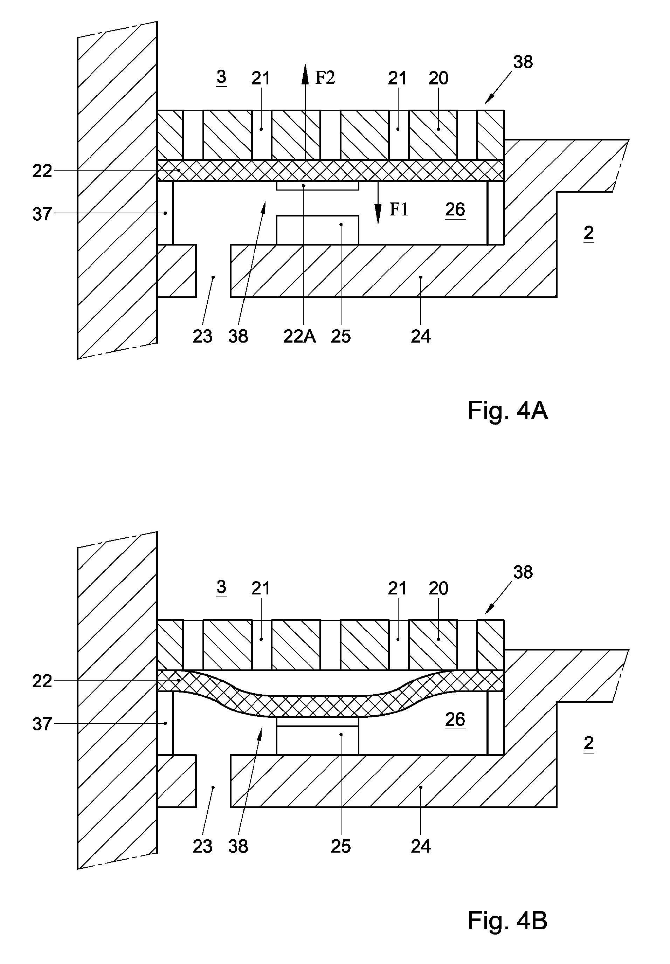

In figures 4a and 4b an enlarged cutout view of the membrane compartment 38 is depicted. Inside the membrane compartment 38, a membrane 22 is positioned. A first surface of the membrane 22 forms a first contact terminal 22a, and the bottom wall 24 of the membrane compartment 38, is equipped with the second contact terminal 25. The first contact terminal 22a can be electrically connected to an indicator 17, which can be for instance embedded in a translucent lens part 16. This electrical connection can be direct or through a printed circuit 39, being part of an electrical circuit E, depicted schematically in figure 7. The printed circuit 39 can for instance generate an intermitted signal causing the one or more indicators 17 to provide an intermittent signal at for instance a desired predetermined frequency.

The membrane compartment 38 further comprises a membrane support member 20, wherein holes 21 are provided for allowing the membrane 22 to experience the reference pressure of the second pressure chamber 3. The support member 20 will support the membrane 22 and prevent the membrane 22 from collapsing or flexing in the direction F2 opposite to the intended flexing direction F1.

Once the pressure in the second pressure chamber 3 is higher that the pressure in the first pressure chamber 2, the membrane 22 will flex as is depicted in figure 4b. As can be seen, by the flexing of the membrane 22, a contact is made between the terminals 22a and 25, thus closing the electrical circuit E (figure 7).

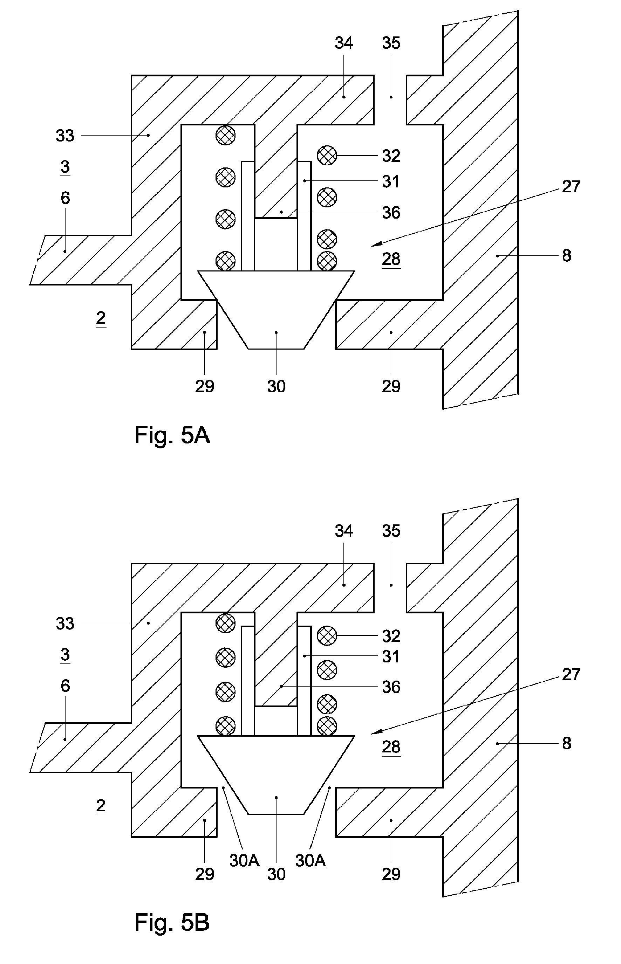

As indicated in figures 2 and 3, the first pressure chamber 2 is connected to a second pressure chamber 3 through check valve (here shown as a non return valve) 27. In figures 5a and 5b, the check valve 27 is depicted in more detail. The check valve 27 can be equipped with a closing member 30 which is attached to a guiding sleeve 31. The guiding sleeve 31 is arranged around a guiding rod 36, connected to and extending from the first valve housing part 34. The closing member 30 is forced against a seat 29 inside a valve housing 33 by means of a spring 32. The spring 32 is arranged around the guiding sleeve 31 and the guiding rod 36 and forces the closing member 30 to abut and to close of the seat 29 of the valve 27.

The housing 33 of the valve 27 is further provided with an opening 35 towards the second pressure chamber 3. If the pressure in the first pressure chamber 2 is higher than the pressure in the second pressure chamber 3, the pressure in the first pressure chamber 2 will force the closing member 30 out of the seat 29 so that gasses can enter through the valve space 28 and the opening 35 into the second pressure chamber 3.

Once the pressure in the second pressure chamber 3 is the same or higher than the pressure in the first pressure chamber 2, the spring 32 will force the guiding sleeve 31 and the closing member 30 back towards their original position, wherein the closing member 30 again abuts the seat 29.

When the pressure in the second pressure chamber 3 becomes higher than the pressure in the first pressure chamber 2, the closing member 30 will be forced in the seat 29 by both the pressure acting on the closing member 30 and the spring 32 acting on the closing member 30. In figure 5a the situation is depicted wherein the pressure in the pressure chamber 3 is higher or the same as the pressure in the pressure chamber 2. Thus a flow of gases is only permitted from the first pressure chamber 2 to the second pressure chamber 3 and not vice versa.

In figure 5b the situation is depicted in which the pressure in the first pressure chamber 2 is higher than the pressure in the second pressure chamber 3. The pressure difference acts as a net force on the closing member 30. When this pressure difference again is sufficiently high it will overcome the counteracting force of the spring 32 and will lift the closing member 30 from its seat 29 and a gap 30a will be formed, so that the valve 27 is opened. The choice of the material properties and the dimensions of the spring 32 will be of influence of the minimal over pressure in the pressure chamber 2 in relation to the pressure chamber 3. A higher spring constant of spring 32 for instance will allow higher pressure differences. On the other hand a larger cross sectional area of the closing member 30 will generally allow an opening of the valve 27 at a lower pressure difference. Through appropriate choice of the spring characteristics of the spring 32 and the dimensions of the closing member 30 the allowed pressure difference between the pressure chambers 2 and 3 can be fine tuned.

In the alternative embodiment shown in figure 3, a reset button 41 is provided. The reset button 41 comprises a pushing knob 42, which is connected to an actuating rod 43. The actuating rod 43 abuts the closing member 30 of the valve 27. The actuating rod is gas tight connected to the lower wall 7 of the pressure indicator 1. This gas tight connection can be constructed as a bellow seal 44, covering an e.g. integrated spring 45. A first side 44a of the bellow seal 44 is gas tight connected to the lower wall 7, a second side 44b of the bellow seal 44 is gas tight connected to the actuating rod 43. The spring 45, which is placed inside the bellow seal 44 or is integrated within the bellow seal 44, maintains the actuating rod 43 at its position and can urge the actuating rod 43 back to its original position when the push knob 42 is pressed by a user.

By pushing the reset button 41, the push knob 42 and the actuating rod 43 move in direction p1. Since the actuating rod 43 abuts the closing member 30 of the check valve 27, by pushing the reset button 41, the check valve 27 opens and the pressure in the first pressure chamber 2 and the second pressure chamber 3 can thus be equalized.

This reset button thus can open the check valve 27, such that the reference pressure in pressure chamber 3 can be equalized for instance when it is substantially higher than the pressure in the pressure chamber 2 and/or in the tire 100 or inner tube 108. This reset button can be of practical use if for instance due to severe temperature changes, the pressure in the pressure chamber 3 is higher than the pressure in the pressure chamber 2 and/or the pressure in the tire 100 or the inner tube 108. In that case the indicator 1 can for instance give a low pressure alarm, where it is in the actual situation only due to for instance rapid heating of the pressure indicator 1 and/or rapid cooling of the tire 100. In order to overcome these extremes pressure changes due to temperature changes, the membrane 22 can for instance be made slightly permeable or porous.

In figure 6, the connection of the pressure indicator 1 onto the valve stem 107 is visualized. In this figure, the inner tube 108 is arranged inside the outer tube 101 and around the rim 103 of the hub 104. The valve stem 107 is connected to the inner tube 108 trough the connection structure 109. The inner tube 108 can be molded or poured in a form or mold and can be vulcanized with the valve stem 107 already being inserted inside the inner tube material in order to have a firm and gas tight connection between the stem 107 and the inner tube 108.

In an alternative embodiment the vehicle tire can be of a tubeless type. In that case the valve stem 107 is directly and airtight connected to the rim 103. Although in the rest of the application the valve stem is described as being connected to the tube, the pressure indicator can be applied in a similar way to tires of the tubeless type.

The valve stem 107 contains a valve 121 like for instance a Schrader valve. This valve 121 comprises an axially moveable valve closing element 114. The valve closing element 114 can be a longitudinally extending rod 117 having on the tube side 120 a closing member 108 and on the extending end 121 a knob 119. The knob 119 can be rounded off in order to smoothly interact with a valve opener 11 of the pressure indicator 1 or a valve opener of a filling device such as a tire pump or a filler hose of a compressor device.

The valve stem 107 is on the outside circumference provided with a thread 122. The thread 122 can cooperate with the inside thread 13 of the valve receiving space 5 of the pressure indicator 1. By means of these cooperating threads 122 and 13, the pressure indicator 1 can be screwed on the valve stem 107. During the screwing on of the pressure indicator 1, the valve opener 11 will urge the valve rod 114 in the direction of the inner valve space 110. This motion will push against the knob 119 on the rod 117, thus releasing the closing member 118 from the seat 111, opening the valve 121 and thus establishing a fluid connection between the interior space 120 of the vehicle tire 100 and the first pressure chamber 2.

Since the fluid connection is established, the first pressure chamber 2 will experience a pressure that is substantially equal to the pressure in the tire 100 or the tube 108. During the rising of the pressure in the first pressure chamber 2, a pressure difference will occur between the first and the second pressure chamber 3. This pressure difference will urge the check valve 27 to open and allow gasses inside the second pressure chamber 3. The pressures in the tire 100 and both pressure chambers 2 and 3 will now be substantially the same. During the service life of the tire 100, due to for instance a slightly porosity of the material of the tire 100 and/or the tube 108, the pressure will gradually decrease. Since the first pressure chamber 2 and the inner space 120 of the tube 10 or the tire 100 are connected, the pressure in the first pressure chamber 2 is decreasing as well. Since the first and second pressure chambers 2 and 3 are only connected by means of the check valve 27, the pressure in the second pressure chamber 3 will substantially be maintained.

At a certain moment in time the pressure in the tire 100 and in the first pressure chamber 2 will be sufficiently less than the pressure in the second pressure chamber 3 to flex the membrane 22. As soon as the membrane 22 is flexed, the contact terminals 22a and 25 will make contact, thus closing the electrical circuit E. By closing the electrical circuit E, a signal will be generated by the one or more indicators 17, alarming the driver and/or others that a dangerous situation is developing in that the tire pressure dropped below a threshold. By pressurizing the tires 100, the pressure difference between the pressure chambers 2 and 3 will decrease. By this decrement in pressure difference, the membrane 22 will stop being flexed, thus breaking the contact between the terminals 22a and 25. By breaking the contact, the electrical circuit E is broken and the alarm signal will be stopped.

In any embodiment of the invention as described before numerous adaptations and modifications are possible. For instance the presure indicator 1 can be equipped with a lower collar that supports on the rim 103 of the wheel 100. Thus impacts on the pressure indicator 1 will be less likely to impair the pressure indicator 1.

Although in the pressure indicator 1 for example visual indicators 17 can be applied, the indication of low tire pressure can also be performed by e.g. a sonic indicator and/or a signal transmitter, transmitting a signal for instance to a receiver in the dashboard of a vehicle. The indicator can alternatively be connected to a vehicle main electrical circuit interrupter, such that at low pressures the vehicle refuses to drive. This interrupter can for instance be integrated in the vehicle motor management system.

These and other adaptations and modifications are possible without departing from the spirit and scope of the invention as defined in the claims.

## Claims

1. A pressure indicator (1), suitable for connection on a valve of a tire and/or a tube and for valve stem (107) mounted indication of the pressure inside the tire (100) and/or the tube (103), the pressure indicator (1) comprising:
- a first pressure chamber (2) that is connected to the air volume (1201) inside the vehicle tire or tube (108);
- a second pressure chamber (3);
- a check valve (27) that connects the first pressure chamber (2) to the second pressure chamber and that only allows gas to pass from the first pressure chamber (2) into the second pressure chamber (3);
- a membrane pressure switch (38) that is arranged between the first pressure chamber (2) and the second pressure chamber (3).

2. A pressure indicator according to claim 1, comprising:
- at least one battery receiving space (18a); and
- a valve stem receiving space (5) having a longitudinal axis (A) wherein the at least one battery receiving space (18a) is positioned offset relative to the central longitudinal axis (A) of the valve stem receiving space (5)

3. A pressure indicator (1) according to claim 1 or 2 wherein the membrane (22) is provided with a first terminal (22a) of a contact switch for contacting with a second terminal (25) of the contact switch (38).

4. A pressure indicator (1) according to claim 3, wherein the membrane (22) is configured to flex due to pressure differences between the pressure in the first pressure chamber (2) and the pressure in the second pressure chamber (3).

5. A pressure indicator according to any one of claims 3-4, wherein the membrane (22) is able to force contact between the first terminal (22a) of the contact switch (38) and a second terminal (25) of the contact switch (38).

6. A pressure indicator (1) according to at least claim 2, wherein the at least one battery receiving space (18a) is positioned in radial sense with respect to the central longitudinal axis (A) of the valve stem receiving space (5) next to the valve stem receiving space (5).

7. A pressure indicator (1) according to at least claim 2, wherein the pressure indicator (1) comprises at least two battery receiving spaces (18a), equally distributed around the central longitudinal axis (A) of the valve stem receiving space (5).

8. A pressure indicator according to at least claim 2, wherein the battery receiving space is donut shaped and has a longitudinal axis that is coaxial with the longitudinal axis (A) of the valve stem.

9. A pressure indicator according to claim 8, wherein the battery receiving space extends circumferentially around the valve stem receiving space (5).

10. A pressure indicator according to claim 8 or 9, including a battery having a donut shaped configuration.

11. A pressure indicator according to any of the preceding claims wherein the indicator comprises a visual indicator, a sonic indicator and/or a radio transmitter, configured to transmit a signal to a remote radio signal receiver.

12. A method of indicating and/or checking the pressure of a vehicle tire with the pressure indicator according to any of the claims 1 to 9, comprising the following step:
- connecting the indicator (1) on the valve stem (107) of the vehicle tire (100).

13. A method according to claim 12, wherein the indicator (1) is screwed on the valve stem (107) of the vehicle tire (100).

14. A method according to claim 12 or 13, wherein the indicator comprises a radio transmitter, able to transmit a signal to a remote radio signal receiver.

15. A method according to claim 14, wherein the remote receiver is integrated in the vehicle and presents a signal or interrupts the power supply of the vehicle to the engine.
